# EUROPEAN PATENT APPLICATION

(11) **EP 1 862 894 A2**
(43) Date of publication of application: **05.12.2007**
(21) Application number: 07001181.2
(22) Date of filing: 19.01.2007
(51) Int. Cl.: G06F 3/06

(54) **Hard disk controller having multiple, distributed processors**

(30) Priority: 01.06.2006 US 444583
(71) Applicant: Broadcom Corporation, Irvine, CA 92617 (US)
(72) Inventor: Mead, John P., Irvine California 92618-7013 (US); Flake, Lance, Irvine California 92618-7013 (US); McGinnis, Kevin W., Irvine California 92618-7013 (US); Mulholland, Brent, Irvine California 92618-7013 (US)
(74) Representative: Jehle, Volker Armin

(57) **Abstract**

Hard disk controller having multiple, distributed processors. A novel approach is presented by which a separate and dedicated processor is provisioned to service each of a plurality of control loops within a hard disk drive (HDD) controller. For example, a first processor is implemented to service a servo control loop, a second processor is implemented to service channel interfacing, and a third processor is implemented to service host interfacing. In some embodiments, the channel and host interfacing are performed using protocol processors implemented within each of a disk manager module and a host manager module, respectively.

## Description

### BACKGROUND OF THE INVENTION

### TECHNICAL FIELD OF THE INVENTION

The invention relates generally to hard disk drives (HDDs); and, more particularly, it relates to provisioning and allocation of processing resources within such HDDs and their respective controllers.

### DESCRIPTION OF RELATED ART

As is known, many varieties of memory storage devices (e.g. disk drives), such as magnetic disk drives are used to provide data storage for a host device, either directly, or through a network such as a storage area network (SAN) or network attached storage (NAS). Typical host devices include stand alone computer systems such as a desktop or laptop computer, enterprise storage devices such as servers, storage arrays such as a redundant array of independent disks (RAID) arrays, storage routers, storage switches and storage directors, and other consumer devices such as video game systems and digital video recorders. These devices provide high storage capacity in a cost effective manner.

Within prior art HDD systems, there are several systems that operate simultaneously and require the allocation of a certain degree of processing resources. In prior art HDD systems, a singular processor is typically provisioned in an effort to service these various systems. More specifically, prior art HDD controllers rely on a main processor to do multiple hard real-time control functions. In prior art HDD systems, either the performance of the overall system suffered or the firmware complexity is greatly increased in these prior art implementations that seek to perform all of these functions using the single processor.

In the prior art, where the acceptable performance or complexity become too great, state machines are added into the hardware for some of the real-time operations. Writable control stores are typically employed as a programmable state machine in some cases. On high-performance prior art HDD controllers, even a second main processor is sometimes added in the prior art at a great expense (in terms of complexity and real estate consumption, among other disadvantages) to help add parallel execution resources.

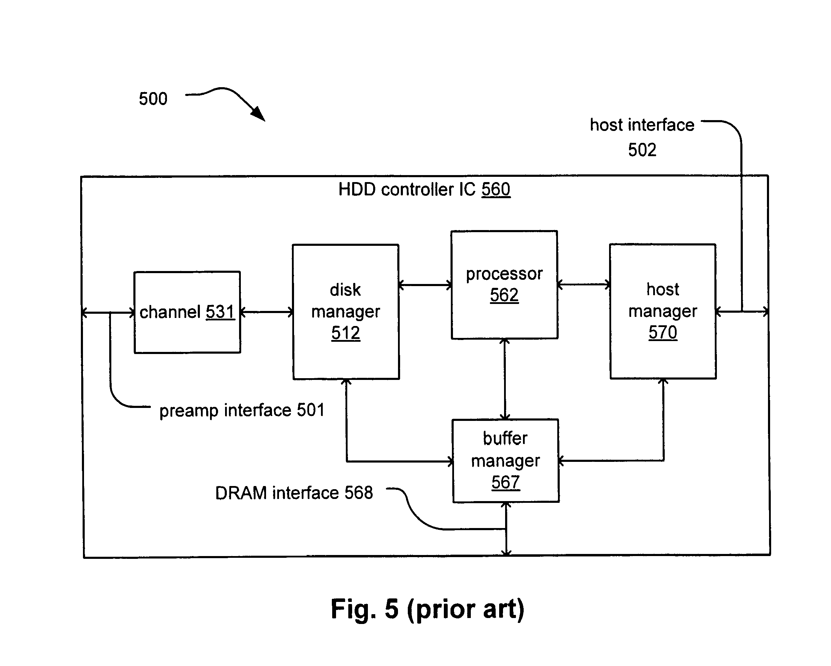

FIG. 5 illustrates a prior art embodiment of an apparatus 500 that employs a single processor to service multiple control loops. The apparatus 500 includes a prior art HDD controller integrated circuit (IC) 560. The host interface 502 is controlled with a host manager module 570 that is operable to move data between the host interface 502 and a buffer (typically external to the HDD controller IC 560) through the buffer manager module 567. The channel 531 of the HDD communicates with the preamp interface 501. The disk manager module 512 controls the channel 531 and moves data between the channel 531 and the buffer through the buffer manager module 567. The buffer manager module 567 arbitrates access to the shared buffer implemented in the DRAM (typically external to the HDD controller IC 560).

Within this prior art apparatus 500, all firmware executes on a single processor 562, which controls the host manager module 570 and disk manager module 512. Cached firmware for the processor 562 may be stored in the DRAM and be accessed through the buffer manager module 567.

The disk manager module 512 typically has a small writable control store to implement a programmable state machine for control of the hardware within the disk manager module 512 and the channel interface (e.g., the channel 531 and the preamp interface 501). Depending on the complexity of the host interface 502, the host manager 570 may have state machines or have a small writable control store to perform its real-time control functions. The processor 562 loads appropriate microprograms into the control store(s) depending on the desired modes of operation.

As can be seen when considering this embodiment, there are many functions which must be performed within such a HDD controller IC 560. By requiring all of these functions to be supported by the processor 562, certain of the functions will be short-changed with respect to processing capability at certain times. For example, the processor 562 certainly needs to support more than one function in this embodiment, and when a majority (or all) of the processing resources and capabilities of the processor 562 are being used for one of the functions, then other of the functions are not going to be serviced well. In real time applications, this manner of provisioning the processing resources to a single processor 562 can result in significantly reduced performance.

Clearly, there is a need in the art for a means by which a better servicing of the various functionality required within a HDD controller device can be performed.

### BRIEF SUMMARY OF THE INVENTION

The present invention is directed to apparatus and methods of operation that are further described in the following Brief Description of the Several Views of the Drawings, the Detailed Description of the Invention, and the claims.

According to an aspect of the invention, an apparatus is provided, comprising:
a processor that is operable to govern a servo control loop within a hard disk drive;
a host manager module that is operable to govern host interfacing, the host manager module includes a first protocol processor that is operable to execute host interfacing protocol control functions; and
a disk manager module that is operable to govern channel interfacing to a disk within the hard disk drive, the disk manager module includes a second protocol processor that is operable to execute channel interfacing protocol control functions.

Advantageously:
the apparatus is an integrated circuit.

Advantageously:
the second protocol processor is operable to perform soft key mapping that enables the disk manager module to support channel interfacing to the disk within the hard disk drive having a first format type and to at least one additional disk having a second format type.

Advantageously:
the first protocol processor governs a host interface control loop within the hard disk drive; and
the second protocol processor governs a channel interface control loop within the hard disk drive.

Advantageously:
the processor, the first protocol processor, and the second protocol processor operate simultaneously and in real-time.

Advantageously:
the processor executes non-servo firmware functions as background processing when the processor employs less than a predetermined amount of its total processing capability to govern the servo control loop.

Advantageously:
the processor employs a first portion of its processing capability to govern the servo control loop; and
the processor employs a second portion of its processing capability to execute non-servo firmware functions.

Advantageously, the apparatus further comprises:
a shared cache that couples to the processor, the first protocol processor, and the second protocol processor; and wherein:
   the shared cache is directly connected to the first protocol processor of the host manager module;
   the shared cache is directly connected to the second protocol processor of the disk manager module; and
   the processor is operable to manage the first protocol processor and the second protocol processor via the shared cache.

Advantageously, the apparatus further comprises:
a buffer; and
a buffer manager module, coupled to the buffer and also coupled to each of the processor, the host manager module, and the disk manager module, that is operable to arbitrate and manage shared access of each of the processor, the host manager module, and the disk manager module to the buffer.

Advantageously, the apparatus further comprises:
a buffer; and
a buffer manager module, coupled to the buffer and also coupled to each of the processor, the host manager module, and the disk manager module, that is operable to arbitrate and manage shared access of each of the processor, the host manager module, and the disk manager module to the buffer; and wherein:
   the host manager module couples to a host interface that is operable to connect to a host device;
   the disk manager module couples to a channel through which read and write accesses are made to the disk of the hard disk drive;
   the host manager module is operable to move first data between the host interface and the buffer via the buffer manager module; and
   the disk manager module is operable to move second data between the channel and the buffer via the buffer manager module.

According to an aspect of the invention, an apparatus is provided, comprising:
a hard disk drive controller that includes a first processor, a second processor, and a third processor; and wherein:
   the first processor that is operable to govern a servo control loop of a hard disk drive;
   a second processor that is operable to execute host interfacing protocol control functions; and
   a third processor that is operable to execute channel interfacing protocol control functions.

Advantageously:
the apparatus is an integrated circuit.

Advantageously:
the hard disk drive controller includes a disk manager module that is operable to govern channel interfacing;
the third processor is implemented within the disk manager module; and
the third processor is operable to perform soft key mapping that enables the disk manager module to support channel interfacing to a disk within the hard disk drive having a first format type and to at least one additional disk having a second format type.

Advantageously:
the hard disk drive controller includes a host manager module that is operable to govern host interfacing;
the hard disk drive controller includes a disk manager module that is operable to govern channel interfacing;
the second processor is implemented within the host manager module;
the third processor is implemented within the disk manager module;
the second processor governs a host interface control loop within the hard disk drive; and
the third processor governs a channel interface control loop within the hard disk drive.

Advantageously:
the first processor employs a first portion of its processing capability to govern the servo control loop; and
the first processor employs a second portion of its processing capability to execute non-servo firmware functions.

Advantageously, the apparatus further comprises:
a shared cache that couples directly to the first processor, the second processor, and the third processor; and wherein:
   the first processor is operable to manage the second processor and the third processor via the shared cache.

Advantageously:
the hard disk drive controller includes a host manager module that is operable to govern host interfacing;
the hard disk drive controller includes a disk manager module that is operable to govern channel interfacing;
the second processor is implemented within the host manager module;
the third processor is implemented within the disk manager module;
the hard disk drive controller includes a buffer; and
the hard disk drive controller includes a buffer manager module, coupled to the buffer and also coupled to each of the first processor, the host manager module, and the disk manager module, that is operable to arbitrate and manage shared access of each of the first processor, the host manager module, and the disk manager module to the buffer;
the host manager module couples to a host interface that is operable to connect to a host device;
the disk manager module couples to a channel through which read and write accesses are made to a disk of the hard disk drive;
the host manager module is operable to move first data between the host interface and the buffer via the buffer manager module; and
the disk manager module is operable to move second data between the channel and the buffer via the buffer manager module.

According to an aspect of the invention, an apparatus comprises:
a processor that is operable to govern a servo control loop within a hard disk drive;
a host manager module that is operable to govern host interfacing, the host manager module includes a first protocol processor that is operable to execute host interfacing protocol control functions;
a disk manager module that is operable to govern channel interfacing to a disk within the hard disk drive, the disk manager module includes a second protocol processor that is operable to execute channel interfacing protocol control functions;
a shared cache that couples to the processor, the first protocol processor, and the second protocol processor; and
a buffer manager module, coupled to a buffer and also coupled to each of the processor, the host manager module, and the disk manager module, that is operable to arbitrate and manage shared access of each of the processor, the host manager module, and the disk manager module to the buffer; and wherein:
   the processor is operable to manage the first protocol processor and the second protocol processor via the shared cache.

Advantageously:
the apparatus is an integrated circuit.

Advantageously:
the processor employs a first portion of its processing capability to govern the servo control loop; and
the processor employs a second portion of its processing capability to execute non-servo firmware functions.

Other features and advantages of the present invention will become apparent from the following detailed description of the invention made with reference to the accompanying drawings.

### BRIEF DESCRIPTION OF THE SEVERAL VIEWS OF THE DRAWINGS

FIG. 1 illustrates an embodiment of a disk drive unit.
FIG. 2 illustrates an embodiment of an apparatus that includes a disk controller.
FIG. 3A illustrates an embodiment of a handheld audio unit.
FIG. 3B illustrates an embodiment of a computer.
FIG. 3C illustrates an embodiment of a wireless communication device.
FIG. 3D illustrates an embodiment of a personal digital assistant (PDA).
FIG. 3E illustrates an embodiment of a laptop computer.
FIG. 4 illustrates an embodiment of an apparatus that includes a hard disk drive (HDD) printed circuit board assembly (PCBA).
FIG. 5 illustrates a prior art embodiment of an apparatus that employs a single processor to service multiple control loops.
FIG. 6 illustrates an embodiment of an apparatus that employs multiple, distributed processors to service multiple control loops.
FIG. 7, FIG. 8, and FIG. 9 illustrate various embodiment of an apparatus that includes a hard disk drive (HDD) controller that employs multiple, distributed processors to service multiple control loops.
FIG. 10 and FIG. 11 illustrate various embodiment of methods that employs multiple, distributed processors to service multiple control loops.

### DETAILED DESCRIPTION OF THE INVENTION

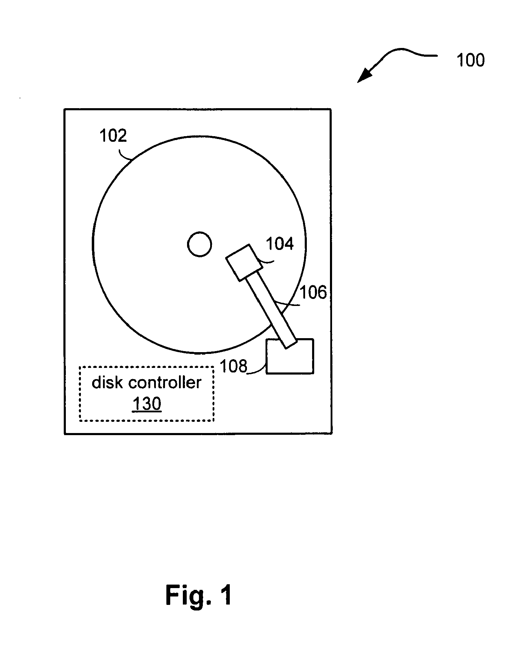

FIG. 1 illustrates an embodiment of a disk drive unit 100. In particular, disk drive unit 100 includes a disk 102 that is rotated by a servo motor (not specifically shown) at a velocity such as 3600 revolutions per minute (RPM), 4200 RPM, 4800 RPM, 5,400 RPM, 7,200 RPM, 10,000 RPM, 15,000 RPM, however, other velocities including greater or lesser velocities may likewise be used, depending on the particular application and implementation in a host device. In one possible embodiment, disk 102 can be a magnetic disk that stores information as magnetic field changes on some type of magnetic medium. The medium can be a rigid or non-rigid, removable or non-removable, that consists of or is coated with magnetic material.

Disk drive unit 100 further includes one or more read/write heads 104 that are coupled to arm 106 that is moved by actuator 108 over the surface of the disk 102 either by translation, rotation or both. A disk controller 130 is included for controlling the read and write operations to and from the drive, for controlling the speed of the servo motor and the motion of actuator 108, and for providing an interface to and from the host device.

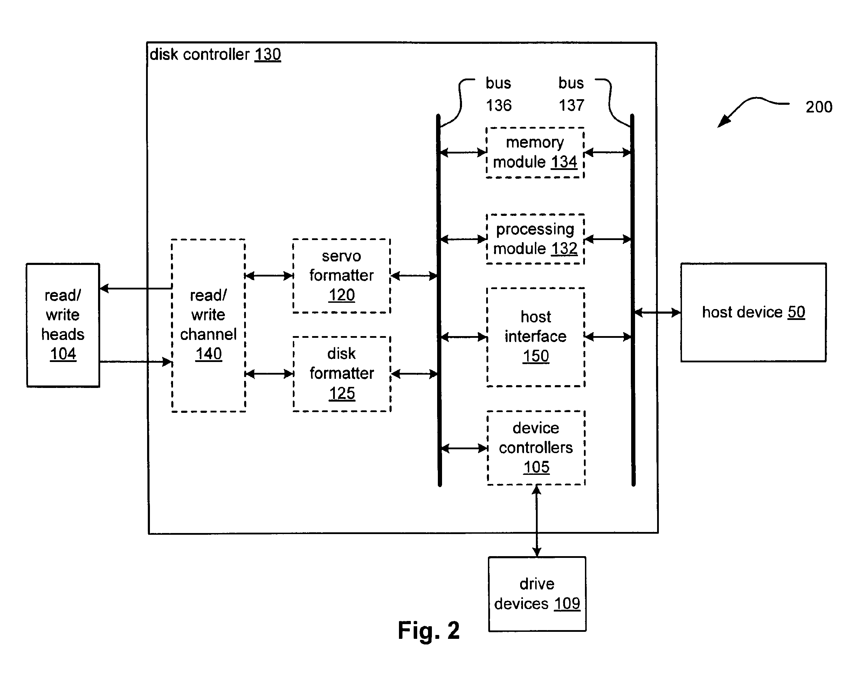

FIG. 2 illustrates an embodiment of an apparatus 200 that includes a disk controller 130. In particular, disk controller 130 includes a read/write channel 140 for reading and writing data to and from disk 102 through read/write heads 104. Disk formatter 125 is included for controlling the formatting of data and provides clock signals and other timing signals that control the flow of the data written to, and data read from disk 102. Servo formatter 120 provides clock signals and other timing signals based on servo control data read from disk 102. Device controllers 105 control the operation of drive devices 109 such as actuator 108 and the servo motor, etc. Host interface 150 receives read and write commands from host device 50 and transmits data read from disk 102 along with other control information in accordance with a host interface protocol. In one embodiment, the host interface protocol can include, SCSI, SATA, enhanced integrated drive electronics (EIDE), or any number of other host interface protocols, either open or proprietary that can be used for this purpose.

Disk controller 130 further includes a processing module 132 and memory module 134. Processing module 132 can be implemented using one or more microprocessors, micro-controllers, digital signal processors, microcomputers, central processing units, field programmable gate arrays, programmable logic devices, state machines, logic circuits, analog circuits, digital circuits, and/or any devices that manipulates signal (analog and/or digital) based on operational instructions that are stored in memory module 134. When processing module 132 is implemented with two or more devices, each device can perform the same steps, processes or functions in order to provide fault tolerance or redundancy. Alternatively, the function, steps and processes performed by processing module 132 can be split between different devices to provide greater computational speed and/or efficiency.

Memory module 134 may be a single memory device or a plurality of memory devices. Such a memory device may be a read-only memory, random access memory, volatile memory, non-volatile memory, static random access memory (SRAM), dynamic random access memory (DRAM), flash memory, cache memory, and/or any device that stores digital information. Note that when the processing module 132 implements one or more of its functions via a state machine, analog circuitry, digital circuitry, and/or logic circuitry, the memory module 134 storing the corresponding operational instructions may be embedded within, or external to, the circuitry comprising the state machine, analog circuitry, digital circuitry, and/or logic circuitry. Further note that, the memory module 134 stores, and the processing module 132 executes, operational instructions that can correspond to one or more of the steps or a process, method and/or function illustrated herein.

Disk controller 130 includes a plurality of modules, in particular, device controllers 105, processing module 132, memory module 134, read/write channel 140, disk formatter 125, servo formatter 120 and host interface 150 that are interconnected via bus 136 and bus 137. Each of these modules can be implemented in hardware, firmware, software or a combination thereof, in accordance with the broad scope of the present invention. While a particular bus architecture is shown in FIG. 2 with buses 136 and 137, alternative bus architectures that include either a single bus configuration or additional data buses, further connectivity, such as direct connectivity between the various modules, are likewise possible to implement the features and functions included in various embodiments.

In one possible embodiment, one or more modules of disk controller 130 are implemented as part of a system on a chip (SoC) integrated circuit. In an embodiment, this SoC integrated circuit includes a digital portion that can include additional modules such as protocol converters, linear block code encoding and decoding modules, etc., and an analog portion that includes device controllers 105 and optionally additional modules, such as a power supply, etc. In a further embodiment, the various functions and features of disk controller 130 are implemented in a plurality of integrated circuit devices that communicate and combine to perform the functionality of disk controller 130.

When the drive unit 100 is manufactured, disk formatter 125 writes a plurality of servo wedges along with a corresponding plurality of servo address marks at equal radial distance along the disk 102. The servo address marks are used by the timing generator for triggering the "start time" for various events employed when accessing the media of the disk 102 through read/write heads 104.

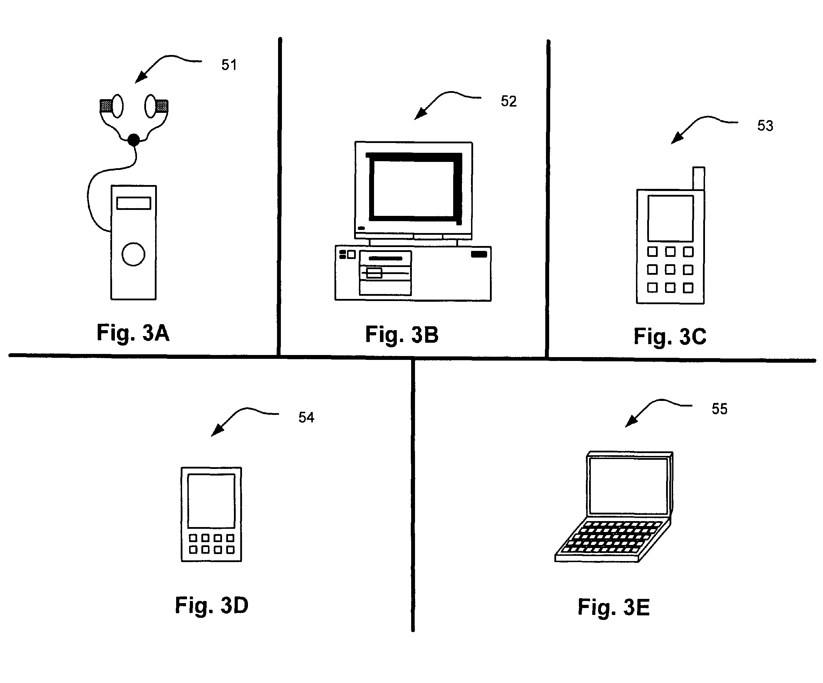

FIG. 3A illustrates an embodiment of a handheld audio unit 51. In particular, disk drive unit 100 can be implemented in the handheld audio unit 51. In one possible embodiment, the disk drive unit 100 can include a small form factor magnetic hard disk whose disk 102 has a diameter 1.8" or smaller that is incorporated into or otherwise used by handheld audio unit 51 to provide general storage or storage of audio content such as motion picture expert group (MPEG) audio layer 3 (MP3) files or Windows Media Architecture (WMA) files, video content such as MPEG4 files for playback to a user, and/or any other type of information that may be stored in a digital format.

FIG. 3B illustrates an embodiment of a computer 52. In particular, disk drive unit 100 can be implemented in the computer 52. In one possible embodiment, disk drive unit 100 can include a small form factor magnetic hard disk whose disk 102 has a diameter 1.8" or smaller, a 2.5" or 3.5" drive or larger drive for applications such as enterprise storage applications. Disk drive 100 is incorporated into or otherwise used by computer 52 to provide general purpose storage for any type of information in digital format. Computer 52 can be a desktop computer, or an enterprise storage devices such a server, of a host computer that is attached to a storage array such as a redundant array of independent disks (RAID) array, storage router, edge router, storage switch and/or storage director.

FIG. 3C illustrates an embodiment of a wireless communication device 53. In particular, disk drive unit 100 can be implemented in the wireless communication device 53. In one possible embodiment, disk drive unit 100 can include a small form factor magnetic hard disk whose disk 102 has a diameter 1.8" or smaller that is incorporated into or otherwise used by wireless communication device 53 to provide general storage or storage of audio content such as motion picture expert group (MPEG) audio layer 3 (MP3) files or Windows Media Architecture (WMA) files, video content such as MPEG4 files, JPEG (joint photographic expert group) files, bitmap files and files stored in other graphics formats that may be captured by an integrated camera or downloaded to the wireless communication device 53, emails, webpage information and other information downloaded from the Internet, address book information, and/or any other type of information that may be stored in a digital format.

In a possible embodiment, wireless communication device 53 is capable of communicating via a wireless telephone network such as a cellular, personal communications service (PCS), general packet radio service (GPRS), global system for mobile communications (GSM), and integrated digital enhanced network (iDEN) or other wireless communications network capable of sending and receiving telephone calls. Further, wireless communication device 53 is capable of communicating via the Internet to access email, download content, access websites, and provide steaming audio and/or video programming. In this fashion, wireless communication device 53 can place and receive telephone calls, text messages such as emails, short message service (SMS) messages, pages and other data messages that can include attachments such as documents, audio files, video files, images and other graphics.

FIG. 3D illustrates an embodiment of a personal digital assistant (PDA) 54. In particular, disk drive unit 100 can be implemented in the personal digital assistant (PDA) 54. In one possible embodiment, disk drive unit 100 can include a small form factor magnetic hard disk whose disk 102 has a diameter 1.8" or smaller that is incorporated into or otherwise used by personal digital assistant 54 to provide general storage or storage of audio content such as motion picture expert group (MPEG) audio layer 3 (MP3) files or Windows Media Architecture (WMA) files, video content such as MPEG4 files, JPEG (joint photographic expert group) files, bitmap files and files stored in other graphics formats, emails, webpage information and other information downloaded from the Internet, address book information, and/or any other type of information that may be stored in a digital format.

FIG. 3E illustrates an embodiment of a laptop computer 55. In particular, disk drive unit 100 can be implemented in the laptop computer 55. In one possible embodiment, disk drive unit 100 can include a small form factor magnetic hard disk whose disk 102 has a diameter 1.8" or smaller, or a 2.5" drive. Disk drive 100 is incorporated into or otherwise used by laptop computer 52 to provide general purpose storage for any type of information in digital format.

From certain perspectives, various aspects of the invention are operable to provide for a better and/or optimal allocation of the real-time firmware requirements of a HDD controller using distributed, multiple processors. In some embodiments, three different processors are employed to support an effective implementation of the required processing resources such that the each of them can adequately perform its respective required functions very effectively. By using distributed, multiple processors, none of the processors is so overwhelmed that it is unable to perform its prescribed operations poorly. In addition, because of this distributed, multiple processor implementation, each of the required processing operations is provisioned with sufficient processing resources such that each of the required functions is performed effectively.

Generally speaking, the HDD controller system has three main hard real-time functions that need parallel execution: (1) servo control loop(s); (2) host interface lower-level protocol; and (3) channel interface lower-level protocol. As can be seen when considering prior art systems, prior art controllers either compromised performance, vastly increased firmware complexity, or added large amounts of hardware to achieve acceptable functionality. Beyond these real-time functions are a variety of background firmware operations that must be performed as well. In some embodiments, the servo control loops and the background firmware are assigned to a centralized, general purpose processor. The host and channel interface lower-level protocols are assigned to their own smaller processors to achieve true parallel execution for the real-time requirements of these interfaces.

In some embodiments described herein, a HDD controller (which can be implemented as a single IC if desired) employs a multiple, distributed processor arrangement for a much improved partition of the hard real time requirements of the system. In some embodiments, the HDD controller uses three processors to partition the hard real time requirements of the system.

Typical, prior art controllers utilize one or at most, two, general purpose processors aided by one or two small writable control stores. In various embodiments described herein, a central general purpose processor can be implemented for the servo real-time firmware (e.g., the servo related control loop(s)) and almost all other system firmware, aided by small host and disk protocol processors that are operable to execute their respective hard real-time functions. This multiple, distributed processor arrangement is a much better allocation of processing resources when compared to what is found in the prior art, and each of the various functions required to perform within the HDD system is not in a situation to be short-changed should some of the other functions be operating in such a way as to require a relatively larger amount of processing capability.

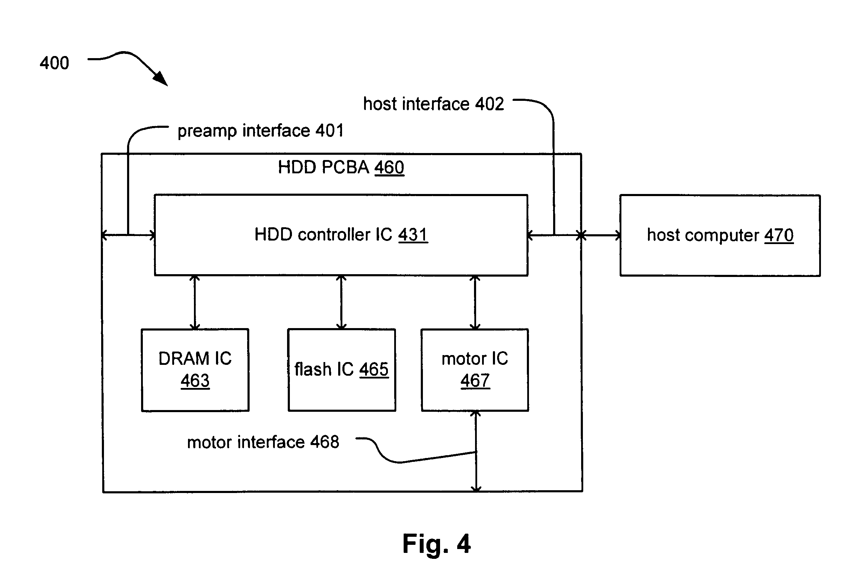

FIG. 4 illustrates an embodiment of an apparatus 400 that includes a hard disk drive (HDD) printed circuit board assembly (PCBA). The apparatus 400 includes a HDD controller IC 431 that is operable to communicate with several other integrated circuits (ICs) and the host computer 470. The preamp interface 401 can be implemented to connect through a flex circuit to a preamp IC on the magnetic head assembly. The host interface 402 usually connects to the host computer 470 through a connector/cable assembly. The HDD controller IC 431 is operable to read and write locations in memory devices such as a DRAM and a flash ROM. The DRAM and flash ROM are shown as ICs, namely, as DRAM IC 463 and flash IC 465. The HDD controller IC 431 is operable to support communications with a motor controller IC 467 to manage the disk drive motors as well.

The prior art apparatus 500 of FIG. 5 is described above within the DESCRIPTION OF RELATED ART section. As can be seen within that diagram, the prior art approach to provisioning processing capability is to employ a single processor within an HDD controller IC 550.

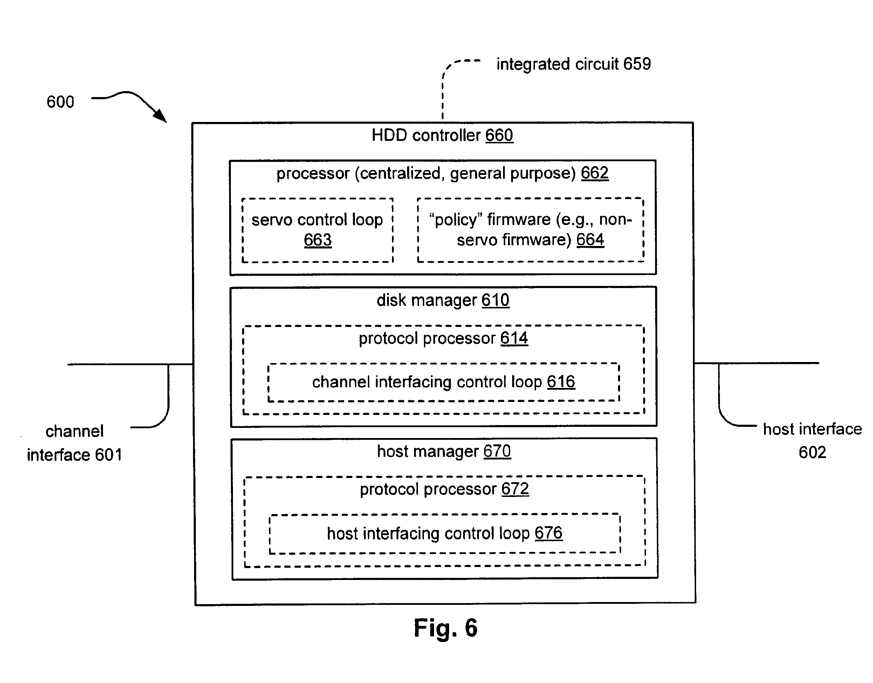

FIG. 6 illustrates an embodiment of an apparatus 600 that employs multiple, distributed processors to service multiple control loops. From a high level point of view, the apparatus 600 employs three distinct processors to service each of three separate functionality groups. This way, by using multiple, distributed processors, such that one processor is dedicated to service each of the various types of operations, none of them is poorly supported or without adequate processing capability.

The apparatus 600 includes a HDD controller 660. The HDD controller 660 can be implemented as an IC 659, if desired. The HDD controller 660 includes a processor 662, which can be implemented as a centralized, general purpose type processor in some embodiments, a disk manager module 610, and a host manager module 670.

The processor 662 is dedicated to support and execute instructions associated with a servo control loop, as shown by reference numeral 663. When and if the processor 662 has sufficient available processing resources, it can service "policy" firmware 664 (e.g., as background processes that can be viewed as non-servo firmware).

The host manager module 670 and the disk manager module 610 show their embedded individual protocol processors, namely, the protocol processor 614 within the disk manager module 610 and the protocol processor 672 within the host manager module 670. The protocol processor 614 within the disk manager module 610 can be implemented to support and execute instructions associated with a channel interfacing control loop, as shown by reference numeral 616, which correspond to the channel interface 601. The protocol processor 672 within the host manager module 670 can be implemented to support and execute instructions associated with a host interfacing control loop, as shown by reference numeral 676, which correspond to the host interface 602.

The processor 662 is operable to access each of the protocol processor 614 within the disk manager module 610 and the protocol processor 672 within the host manager module 670 through that respective protocol processor's register and memory space. In some embodiments, the processor 662 is operable to perform direct pipe access of each of the protocol processor 614 within the disk manager module 610 and the protocol processor 672 within the host manager module 670 thereby providing coherency.

As can be seen within this diagram, a distributed approach is made such that each of the various control loops has its own dedicated processor. This way, each of these various control loops will be provisioned with sufficient processing resources, and those processing resources will always be available to service the respective control loop (as each processor is not competing with multiple control loops or trying to service multiple control loops).

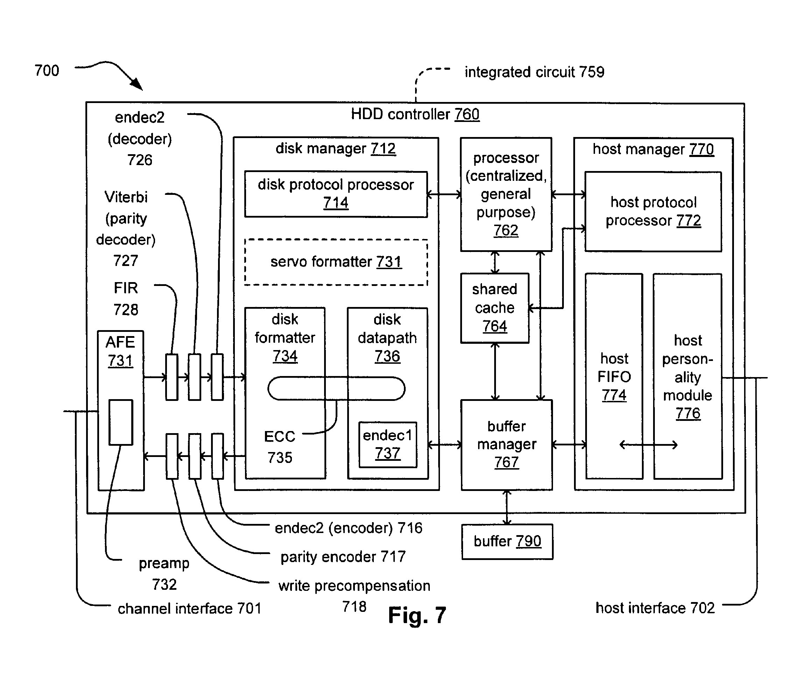

FIG. 7, FIG. 8, and FIG. 9 illustrate various embodiment of an apparatus that includes a hard disk drive (HDD) controller that employs multiple, distributed processors to service multiple control loops.

Referring the apparatus 700 of the FIG. 7, the apparatus 700 includes a HDD controller 760 (which can be implemented as a single IC is desired). A host manager module 770 and a disk manager module 712 show their embedded individual protocol processors, namely, the disk protocol processor 714 within the disk manager module 712 and the host protocol processor 772 within the host manager module 770. To facilitate inter-processor communication, a shared data cache 764 is included in the apparatus 700. Each of the 3 processors (a centralized, general purpose processor 762, the disk protocol processor 714, and the host protocol processor 772) can read and write shared data structures (stored in the buffer) to help manage the real-time functions performed by the two protocol processors (disk protocol processor 714 and the host protocol processor 772). The shared data cache 764 provides for hardware-enforced coherency of these shared accesses.

The host interface 702 is controlled with the host manager module 770 that is operable to move data between the host interface 702 and a buffer 790 through a buffer manager module 767. The disk manager module 712 controls many of the various components that eventually couple to the channel interface 701 and moves data between the channel and the buffer 790 through the buffer manager module 767. The buffer manager module 767 arbitrates access to the shared buffer 790, which can be implemented in the DRAM.

The host manager module 770 also includes a host personality module 776 that is operable to perform and enable host interfacing with various types of hosts via the host interface 702. The host protocol processor 772, implemented within the host manager module 770, is operable to support soft key mapping which allows the host personality module 776 to emulate more than one type of host compatible interface. For example, the soft key mapping employed therein allows the host personality module 776 to interface properly with a first type of host device and to interface properly with a second type of host device, depending on which soft key is employed. This way, a singular piece of hardware can be employed across a wide range of platforms.

A host first-in/first-out (FIFO) buffer 774 is implemented within the host manager module 770 as well, and it interacts with the host personality module 776. The host FIFO 774 interfaces with the buffer manager 767 in the manner as described above, in that, the host manager module 770 is operable to move data between the host interface 702 and the buffer 790 through the buffer manager module 767 via the host personality module 776 and the host FIFO 774.

The disk manager module 712 can also be implemented to include a servo formatter module 731 that is operable to format commands and functions into the appropriate format for execution within the servo control loop. The disk manager module 712 also includes a disk datapath module 736 that is operable to interface with the buffer manage module 767. The disk datapath module 736 is operable to perform modulation encoding/decoding as indicated by endec1 737. The error correction code (ECC) 735 is encoded during disk write processes and with an ECC symbol generator that is located in a disk formatter module 734. If desired, the ECC 735 can be decoded in a two step process: (1) syndromes are generated during disk reads in a syndrome generator that is located in the disk formatter module 734 and then (2) the error correction is performed in an on-the-fly ECC computer in the disk datapath module 736. The endec1 737 can be viewed as being the reverse-ECC modulation ENDEC, in that, the endec1 737 is operable to perform the modulation encoding/decoding on the reverse side of the ECC system from the perspective of the channel through which disk read and write accesses are performed. In doing this, error propagation can hopefully be reduced, if not eliminated completely. The modulation encoding/decoding as indicated by endec2 is employed to encode the ECC (and the endec1 generated redundancy bits) as the reverse ECC encoding of the ECC symbols can be burdensome and cost ineffective from certain points of view.

The disk formatter module 734 that is implemented within the disk manager module 712 is operable to perform the appropriate formatting for information to be written to the disk via a write path and de-formatting of information that is read from the disk via a read path.

The path for writing into the disk from the disk formatter module 735 is shown as first passing through an encoder 716 that performs the modulation encoding, shown as according to endec2. The encoded information is then provided to a parity encoder 717, whose output couples to a write precompensation module 718 that eventually couples to an analog front end (AFE) 731, that is operable to perform any of a variety of analog processing functions including digital to analog conversion, scaling (e.g., gain or attenuation), digital filtering (before converting to continuous time domain), continuous time filtering (after converting to continuous time domain), or other signal processing functions required to comport the signal into a format compatible with the channel interface 701. The AFE 731 also includes a preamp 732 that is often implemented as part of the read head assembly.

The path for reading from the disk is the converse of the write path to the disk. For example, when coming from the channel interface 701, the signal is provided initially to the AFE 731, in which the converse of many of the signal processing operations within the write process is performed. For example, an analog to digital conversion is performed, scaling, and/or filtering, among other signal processing operations.

After passing from the AFE 731 during a read process, the signal passes through a finite impulse response filter (FIR) 728, a Viterbi decoder 727 that is operable to employ the soft output Viterbi algorithm (SOVA) to determine a soft output that is indicative of the reliability of the information within the digital signal. For example, the Viterbi decoder 727 is operable to determine whether the digital signal provided to it is reliable or not. In addition, the Viterbi decoder 727 can be viewed as performing the parity decoding processing in the read path in response to the parity encoding processing (that is performed by the parity encoder 717) in the write path. The output from this Viterbi decoder 727 as provided to a decoder 726 that employs the same code as the encoder 716, namely, the second ECC, shown as endec2. The output from this decoder 726 is provided to the disk formatter module 734.

It is also noted with respect to the embodiment of FIG. 7 as well other embodiments described herein, the various aspects of the invention of employing multiple, distributed processors can also be implemented within embodiments in which the various modules within an HDD controller 760 are partitioned and implemented as a 2 or more circuitry embodiment (e.g., where the HDD controller 760 is partitioned into a 2 integrated circuit embodiment of a controller circuitry and channel circuitry that are coupled via an interface. In other words, the various functionalities described herein can also be applied into embodiments in which the disk manager operations are implemented within one circuitry and the host manager operations are implemented within another circuitry

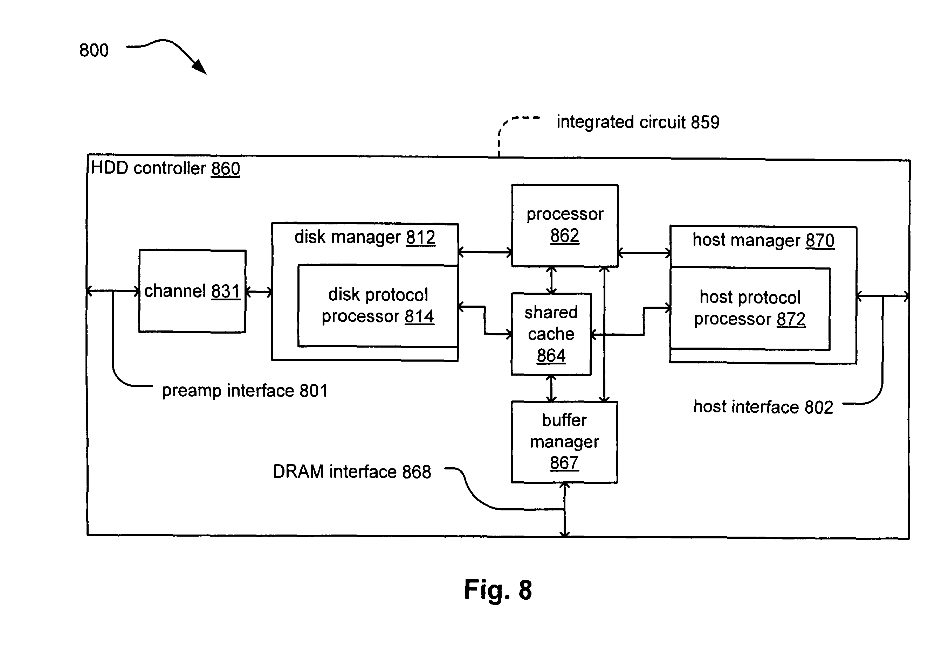

Referring the apparatus 800 of the FIG. 8, this embodiment provides for two small processors (e.g., protocol processors) to be implemented in place of writable control stores that are typically used within prior art host manager and disk manager modules. For example, a disk manager module 812 includes a disk protocol processor 814, and a host manager module 870 includes a host protocol processor 872.

The disk protocol processor 814 and the host protocol processor 872 are dedicated to executing the hard real-time control functions of their respective interface protocols, namely, with respect to the disk interface via the channel 831 and the preamp interface 801 and the host interface 802. The disk protocol processor 814 and the host protocol processor 872 un-burden the main processor 862 (which can be implemented as a general purpose type processor), allowing the processor 862 to execute servo hard real-time control functions and background operations (e.g., background related firmware related functions). The main processor 862 manages the disk protocol processor 814 and the host protocol processor 872 through direct connections and shared memory communications.

The apparatus 800 includes a HDD controller 860. The HDD controller 860 can be implemented as an IC 859, if desired. The host manager module 870 and a disk manager module 812 show their embedded individual protocol processors, namely, the disk protocol processor 814 within the disk manager module 812 and the host protocol processor 872 within the host manager module 870. To facilitate inter-processor communication, a shared data cache 864 is included in the apparatus 800. Each of the 3 processors can read and write shared data structures (stored in the buffer) to help manage the real-time functions performed by the two protocol processors (disk protocol processor 814 and the host protocol processor 872). The shared data cache 864 provides for hardware-enforced coherency of these shared accesses.

The shared cache 864 is a common multi-processor structure. To provide for coherency of multi-location data structure updates, additional multi-processor communication mechanisms are provided in the system. One such mechanism can be semaphores.

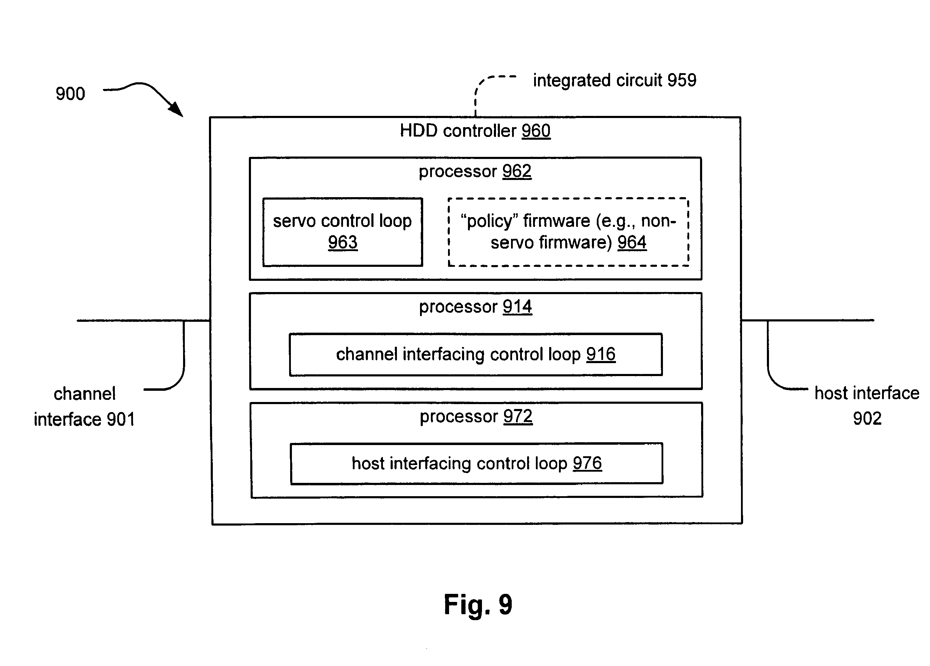

Referring the apparatus 900 of the FIG. 9, from a high level point of view, the apparatus 900 employs three distinct processors to service each of three separate control loops. As stated with respect to other embodiments, by using multiple, distributed processors, such that one processor is dedicated to service each of the various types of operations, none of them is poorly supported or without adequate processing capability.

The apparatus 900 includes a HDD controller 960 (which can be implemented as an IC 959, if desired). The HDD controller 960 includes a first processor 962, which is dedicated to support and execute instructions associated with a servo control loop, as shown by reference numeral 963. When and if the processor 962 has sufficient available processing resources, it can service "policy" firmware 964 (e.g., as background processes that can be viewed as non-servo firmware).

The HDD controller 960 also includes a second processor 914 and a third processor 972. The second processor 914 is operable to support and execute instructions associated with a channel interfacing control loop, as shown by reference numeral 916, which correspond to the channel interface 901. The third processor 972 is operable to support and execute instructions associated with a host interfacing control loop, as shown by reference numeral 976, which correspond to the host interface 902.

As can be seen within this diagram, a distributed approach is made such that each of the 3 various control loops has its own dedicated processor. This way, each of these 3 control loops is provisioned with sufficient processing resources, and those processing resources will always be available to service the respective control loop (as each processor is not competing with multiple control loops or trying to service multiple control loops).

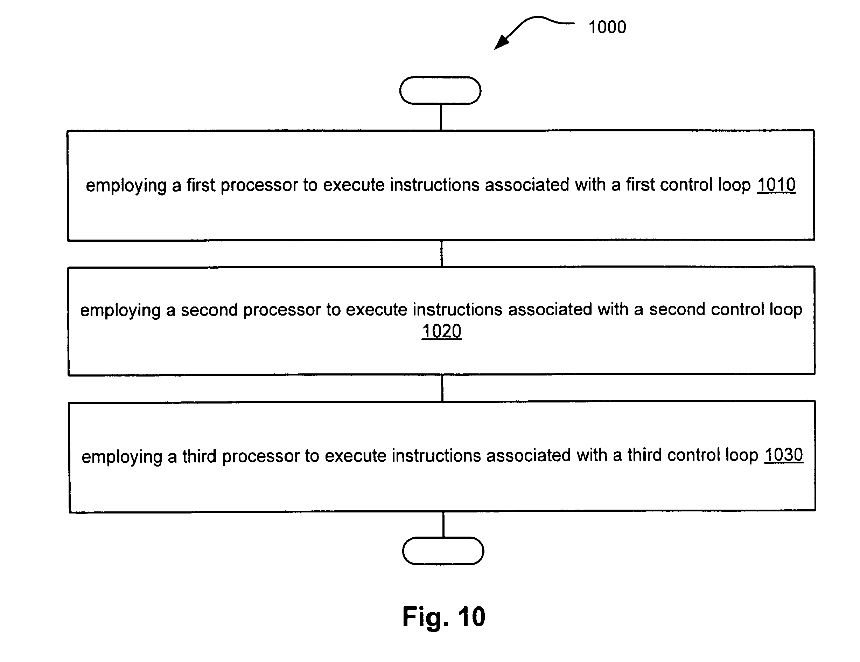

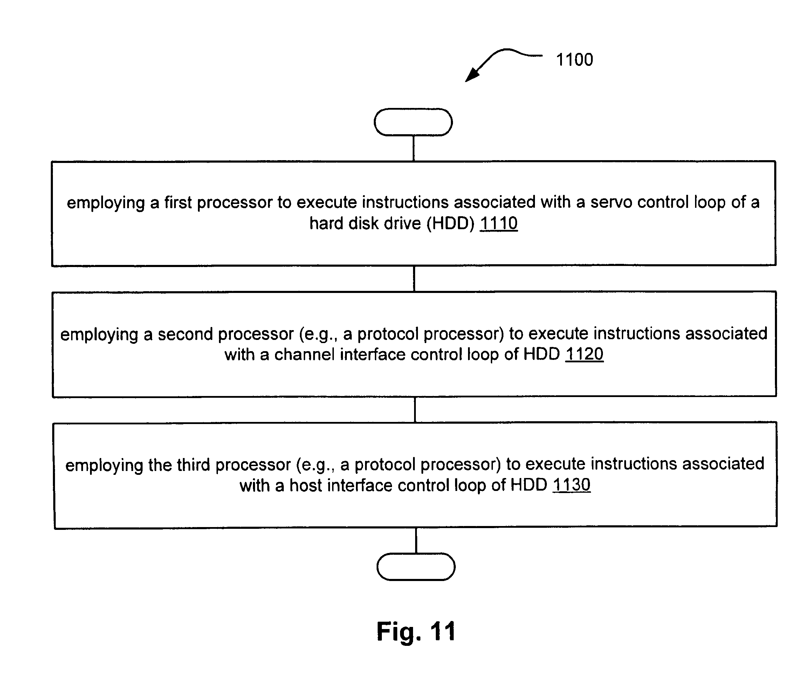

FIG. 10 and FIG. 11 illustrate various embodiment of methods that employs multiple, distributed processors to service multiple control loops.

Referring the method 1000 of the FIG. 10, the method 1000 begins by employing a first processor to execute instructions associated with a first control loop, as shown in a block 1010. Then, the method 1000 continues by employing a second processor to execute instructions associated with a second control loop, as shown in a block 1020. Ultimately, the method 1000 continues by employing a third processor to execute instructions associated with a third control loop, as shown in a block 1030. This method shows a distributed operational approach to dedicating each of a plurality of control loops to having its own processor.

Referring the method 1100 of the FIG. 11, this method 1100 is somewhat analogous to the method 1000 of FIG. 10. The method 1110 begins by employing a first processor to execute instructions associated with a servo control loop of a hard disk drive (HDD), as shown in a block 1110. Then, the method 1100 continues by employing a second processor to execute instructions associated with a channel interface control loop of the HDD, as shown in a block 1120. This second processor can be implemented as a protocol processor in some embodiments, and such a protocol processor can be implemented within a disk manager module in even other embodiments. Ultimately, the method 1100 continues by employing a third processor to execute instructions associated with a host interface control loop of the HDD, as shown in a block 1130. This third processor can be implemented as a protocol processor in some embodiments, and such a protocol processor can be implemented within a host manager module in even other embodiments. This method shows yet another distributed operational approach to dedicating each of a plurality of control loops to having its own processor.

As can now be understood, by applying a tailored and better amount of processing hardware to perform each of the hard real-time functions of a HDD controller, better overall performance is achieved. By using protocol processors in place of state machines or writable control stores the task of developing firmware for the hard drive is simplified, and system flexibility is increased.

It is noted that the various aspects presented herein can be applied across a very wide range of media storage devices, includes those that employ optical drive controllers.

It is also noted that the methods described within the preceding figures may also be performed within any appropriate system and/or apparatus designs without departing from the scope and spirit of the invention.

In view of the above detailed description of the invention and associated drawings, other modifications and variations will now become apparent. It should also be apparent that such other modifications and variations may be effected without departing from the spirit and scope of the invention.

## Claims

1. An apparatus, comprising:
a processor that is operable to govern a servo control loop within a hard disk drive;
a host manager module that is operable to govern host interfacing, the host manager module includes a first protocol processor that is operable to execute host interfacing protocol control functions; and
a disk manager module that is operable to govern channel interfacing to a disk within the hard disk drive, the disk manager module includes a second protocol processor that is operable to execute channel interfacing protocol control functions.

2. The apparatus of claim 1, wherein:
the apparatus is an integrated circuit.

3. The apparatus of claim 1, wherein:
the second protocol processor is operable to perform soft key mapping that enables the disk manager module to support channel interfacing to the disk within the hard disk drive having a first format type and to at least one additional disk having a second format type.

4. The apparatus of claim 1, wherein:
the first protocol processor governs a host interface control loop within the hard disk drive; and
the second protocol processor governs a channel interface control loop within the hard disk drive.

5. The apparatus of claim 1, wherein:
the processor, the first protocol processor, and the second protocol processor operate simultaneously and in real-time.

6. The apparatus of claim 1, wherein:
the processor executes non-servo firmware functions as background processing when the processor employs less than a predetermined amount of its total processing capability to govern the servo control loop.

7. An apparatus, comprising:
a hard disk drive controller that includes a first processor, a second processor, and a third processor; and wherein:
the first processor that is operable to govern a servo control loop of a hard disk drive;
a second processor that is operable to execute host interfacing protocol control functions; and
a third processor that is operable to execute channel interfacing protocol control functions.

8. The apparatus of claim 7, wherein:
the apparatus is an integrated circuit.

9. The apparatus of claim 7, wherein:
the hard disk drive controller includes a disk manager module that is operable to govern channel interfacing;
the third processor is implemented within the disk manager module; and
the third processor is operable to perform soft key mapping that enables the disk manager module to support channel interfacing to a disk within the hard disk drive having a first format type and to at least one additional disk having a second format type.

10. An apparatus, comprising:
a processor that is operable to govern a servo control loop within a hard disk drive;
a host manager module that is operable to govern host interfacing, the host manager module includes a first protocol processor that is operable to execute host interfacing protocol control functions;
a disk manager module that is operable to govern channel interfacing to a disk within the hard disk drive, the disk manager module includes a second protocol processor that is operable to execute channel interfacing protocol control functions;
a shared cache that couples to the processor, the first protocol processor, and the second protocol processor; and
a buffer manager module, coupled to a buffer and also coupled to each of the processor, the host manager module, and the disk manager module, that is operable to arbitrate and manage shared access of each of the processor, the host manager module, and the disk manager module to the buffer; and wherein:
the processor is operable to manage the first protocol processor and the second protocol processor via the shared cache.
